# EUROPEAN PATENT APPLICATION

(11) **EP 1 577 237 A1**
(43) Date of publication of application: **21.09.2005**
(21) Application number: 05251476.7
(22) Date of filing: 11.03.2005
(51) Int. Cl.: B65G 65/23, B60P 1/34

(54) **Skip Loader**

(30) Priority: 16.03.2004 GB 0405842
(71) Applicant: Caplen, Peter Frederic, Tiverton, Devon, EX16 7HN (GB); McDonald, Malcolm, Tiverton, Devon, EX16 8RN (GB)
(72) Inventor: Caplen, Peter Frederic, Tiverton, Devon, EX16 7HN (GB); McDonald, Malcolm, Tiverton, Devon, EX16 8RN (GB)
(74) Representative: Brown, Michael Stanley

(57) **Abstract**

A skip loader comprises a main frame (10), a carrier frame (11) arranged for powered movement relative to the main frame (10), a bucket (12) pivotally mounted on the carrier frame (11) and guide means (23) acting between the bucket (12) and the main frame (10) whereby, when the carrier frame (11) is moved upwardly relative to the main frame (10) and approaches the upper limit of its travel, the bucket (12) is caused to pivot from a transport condition into a tipping condition.

## Description

### Field of the Invention

This invention relates to skip loaders, i.e. to devices for use by, for example, a builder for loading materials into a skip.

One form of skip loader is described in British Patent Specification No. 2 234 956 and includes a wheeled frame on which a chute is pivotally mounted. The frame carries a hook formation for engagement over a side of a skip and the chute is arranged for pivotal movement between a loading position, in which material contained in a wheelbarrow can be tipped into the chute, and an unloading position, in which the material placed in the chute is discharged gravitationally into the skip.

If significant quantities of material are to be transferred into the chute and then into the skip, the power requirements will be substantial and it is an object of the present invention to provide an improved form of skip loader that can be operated using considerably less power.

It is a further object of the present invention to provide a skip loader that is readily transportable and that is economic to produce.

### Summary of the Invention

According to the present invention there is provided a skip loader comprising a main frame, a carrier frame arranged for powered movement relative to the main frame, a bucket pivotally mounted on the carrier frame and guide means acting between the bucket and the main frame whereby, when the carrier frame is moved upwardly relative to the main frame and approaches the upper limit of its travel, the bucket is caused to pivot from a transport condition into a tipping condition.

The guide means preferably comprises a guide rail mounted on or forming part of the main frame and rollers mounted on the bucket. The guide rail is conveniently of curvate form at its upper end.

The carrier frame is preferably of generally rectangular form with sliders at its corners that run in channel-section track members that form part of the main frame. The pivotal mounting of the bucket to the carrier frame may comprise a hinge that extends for the full width of the bucket.

The means for moving the carrier frame relative to the main frame conveniently includes a motor with single or twin pulleys connected by twin cables to the carrier frame, the motor being contained within a housing mounted on the main frame. Electronic control means may also be contained within the housing.

Cut-out switches may be provided to cause stopping of the motor or motors at the limits of travel of the carrier frame relative to the main frame.

Clamp means is preferably provided for secure attachment of the main frame of the skip loader to a skip. The clamp means may be adjustable in height so that the skip loader can be used for loading materials into skips of different heights.

Ground-engaging wheels may be mounted on the main frame to facilitate manoeuvring of the skip loader into a required position.

The invention also provides the combination of a skip loader as defined above and a wheeled transport module for transporting the skip loader, the wheeled transport module including means for engagement with the main frame adjacent the upper and lower ends of the main frame.

The wheeled transport module preferably includes a chassis, support struts extending from the chassis and locking means for securing one of the struts to the skip loader.

### Brief Description of the Drawings

Figure 1 is a front view of a skip loader,
Figure 2 is a side view of the skip loader during transport thereof using a transport module, and
Figure 3 is a side view of the skip loader during unloading thereof from the transport module.

### Description of the Preferred Embodiment

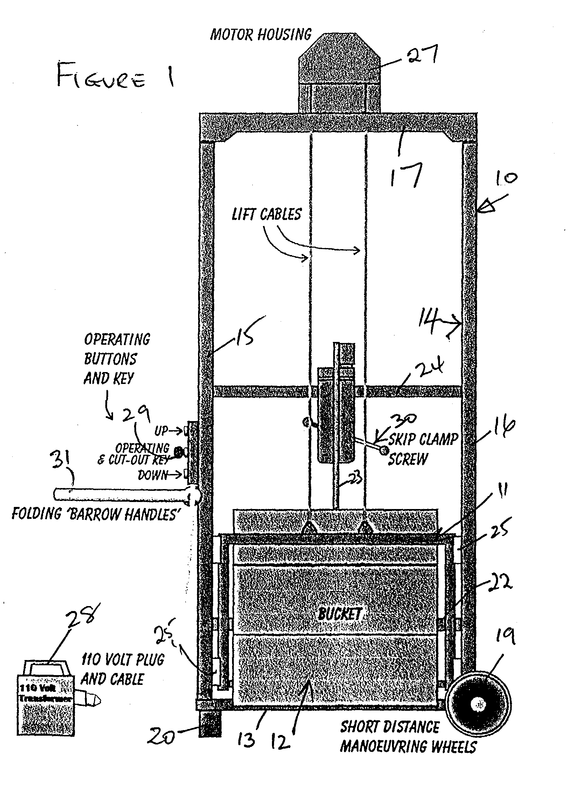

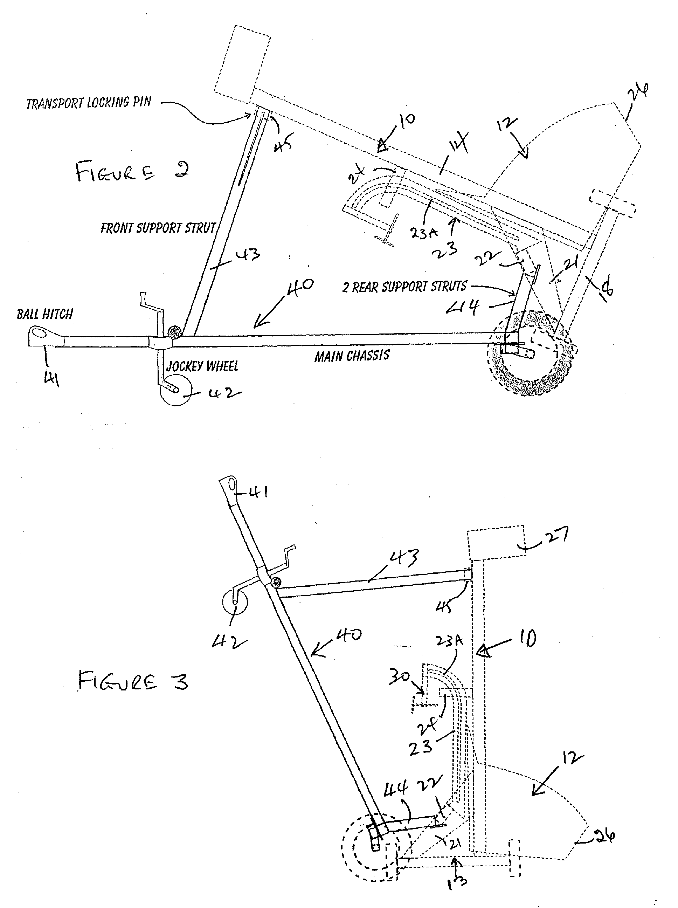

The skip loader shown in the drawings includes a main frame 10, a carrier frame 11 and a bucket 12. The main frame 10 includes a generally rectangular base portion 13 and an upwardly extending portion 14 formed from channel-section steel elements 15 and 16 and a top member 17. The base portion 13 includes a transverse member 18 at the end of which ground-engaging wheels 19 are provided. The base portion 13 also includes an elongated ground-engaging foot 20 that extends parallel to the transverse member 18 so that, when the skip loader is in its upright condition, as shown in Figures 1 and 3, it is stably supported.

Inclined support struts 21 extend upwardly from the sides of the base portion 13 to the upright elements 15 and 16 and the two support struts 21 are interconnected by a box-section beam 22. A steel guide rail 23 extends upwardly from the centre of box-section beam 22 and a support structure 24, which is welded to the upright elements 15 and 16, serves to support the upper end of the guide rail 23, which is formed with a longitudinally extending slot 23A. The upwardly extending portion 14 of the main frame 10 extends at an inclination of the order of 10° to the vertical when the skip loader is in use.

The carrier frame 11 is of rectangular configuration and is fitted with four low-friction nylon blocks 25 that run up and down within the channel sections of the upright elements 15 and 16. Three sides of the carrier frame 11 are of box section, while the fourth or bottom side of the carrier frame 11 is afforded by a round steel bar that provides a pivot axis for the pivotal mounting of the bucket 12.

The bucket 12 is designed to carry more than a full load of a builder's wheelbarrow and has a low front wall 26 to facilitate emptying of the contents of a barrow into the bucket 12. A steel box-section element (not shown) is welded to the bottom of the bucket 12 and forms the other component of the pivotal mounting for the bucket 12. The box-section element is in the optimum front-rear position to provide maximum pivot efficiency. This arrangement gives maximum support to the carrier frame 11 and spreads the load across the whole of the bottom of the bucket 12.

Two lugs (not shown) extend rearwardly of the back wall of the bucket 12 and a bushed pin interconnects the two lugs. The two lugs are disposed one on each side of the guide rail 23 and the bushed pin interconnecting the lugs is received in the slot 23A in the guide rail 23.

. When the bucket 12 is full of material, the majority of the weight of the material in the bucket 12 is towards the front of the bucket 12. As can be seen from Figures 2 and 3, the guide rail 23 is straight for the majority of its length, but the upper end thereof is of curvate configuration, as is the slot 23A. As the bucket 12 is raised towards the tipping position, the bushed pin enters the curvate portion of the slot 23A in the guide rail 23 and conducts the bucket 12 towards its tipping position. As the bucket 12 continues to tilt, a position is reached in which the contents of the bucket 12 will slide gravitationally along the back wall of the bucket 12 and will empty into the skip.

The power for movement of the carrier frame 11 (and thus the bucket 12) is obtained from an electric motor contained in a housing 27 mounted on the top member 17 of the main frame 10. The power for the motor is obtained from a 110 volt portable power supply 28 and the motor has twin pulleys connected by cables to attachment lugs on the upper frame member of the carrier frame 11.

The power supply to the motor in the housing 27 is controlled by a key 29 and by up and down buttons located adjacent the key 29. Thus, after loading the required quantity of material into the bucket 12 and after switching on the key 29, the user will press the "up" button to effect raising of the carrier frame 11 and thus the bucket 12.

When the upward travel of the bucket 12 has been completed and the contents of the bucket 12 have been tipped into the skip, the bucket 12 and the carrier frame 11 can be returned gravitationally to the ground, in readiness for re-filling of the bucket 12, under full control from the operator on pressing the "down" button. Automatic cut-out switches (not shown) are provided at the limits of travel of the carrier frame 11 relative to the main frame 10.

A clamp mechanism 30 is attached to the upper end of the guide rail 23 and includes a manually operable screw device for attaching the main frame 10 securely to the skip. Adjustment means (not shown) may be provided for adjusting the height of the clamp mechanism 30 to enable the loader to be attached securely to skips of different heights.

Foldable handles 31 are mounted on channel-section frame member 15 just below the operating buttons and key 29.

The method of raising and tilting the bucket 12 is such that this is effected with minimum power requirement and maximum safety.

It will be appreciated that the loader is of compact, economic construction and of such size that, if desired, it can be transported in a builder's van.

Transport of the skip loader may alternatively be effected using the module 40 shown in Figures 2 and 3. It includes a wheeled chassis having a ball hitch 41 at its front end for connection of the module 40 to the towing hitch of a car or van. A jockey wheel 42 is mounted on the chassis adjacent a front support strut 43 and there are two rear support struts 44 at the rear of the chassis.

For transport purposes, the module 40 is raised to a near vertical position - as illustrated in Figure 3 - and is wheeled up to the skip loader so that the rear support struts 44 engage the box-section beam 22. The free end of the front support strut 43 is fitted into a box 45 mounted on the rear of the top frame member 17 and a fixing pin is inserted in aligned slots and apertures in the support strut 43 and the box 45. Once the module 40 has been attached to the skip loader, the module 40 and skip loader can be tilted into the transport position shown in Figure 2. Clamps (not shown) on the rear support struts 44 are then tightened over the box-section beam 22 to secure the skip loader securely to the module 40. A trailer lighting board (not shown) is then mounted on the bucket 22 and the module 40 and skip loader are then ready for road transportation.

On reaching a site at which a skip is located, the jockey wheel 42 is wound down and the module 40 is unhitched from the towing vehicle. If the skip is not very accessible by road vehicles, the module 40 and the skip loader can be moved manually into the required position. Once adjacent to the skip, the module 40 is raised to the near vertical position - as shown in Figure 3 - in which the wheels 19 and the foot 20 engage the ground and take the weight of the skip loader. The rear support struts 44 of the module 40 are then unclamped from the box-section beam 22 of the skip loader and the front support strut retaining pin is removed to allow the module 40 to be returned to its horizontal condition. The module 40 is not provided with brakes and it will accordingly be necessary to apply position chocks in engagement with the wheels of the module 40 to prevent inadvertent movement thereof.

Once the module 40 has been moved away from the skip loader, the handles 31 are folded upwardly and are used to raise one side of the skip loader so that it can be wheeled into position, on the wheels 19, into a position adjacent the skip. The skip loader is then clamped to the skip using the screw clamp mechanism. Once the skip loader has been fixed in position, rubble and other builders' materials can be placed, using a wheelbarrow, in the bucket 12 and the bucket 12 can be raised into its tipping position.

The particular form of screw clamp mechanism shown in the drawings is designed for attachment to the side of a skip. If, however, access can only be obtained to an end of the skip, an additional clamp bracket will be used.

A modified form of skip loader comprises a main frame 10 and a guide rail 23 that are formed as a plurality of sections. Additional sections, of a variety of different lengths can be used to increase the height to which the bucket 12 can be raised. The sections of the main frame 10 and the guide rail 23 slot into each other and are secured together with latching clips. Extended lifting cables and an extended wiring loom will also be supplied. This modified form of skip loader can be used for the transfer of materials into high-sided commercial skips and to lift building materials up to scaffold height.

## Claims

1. A skip loader comprising a main frame, a carrier frame arranged for powered movement relative to the main frame, a bucket pivotally mounted on the carrier frame and guide means acting between the bucket and the main frame whereby, when the carrier frame is moved upwardly relative to the main frame and approaches the upper limit of its travel, the bucket is caused to pivot from a transport condition into a tipping condition.

2. A skip loader as claimed in Claim 1, in which the guide means comprises a guide rail mounted on or forming part of the main frame and rollers mounted on the bucket.

3. A skip loader as claimed in Claim 2, in which the guide rail is of curvate form at its upper end.

4. A skip loader as claimed in any one of the preceding claims, in which the carrier frame is of generally rectangular form with sliders at its corners that run in channel-section track members that form part of the main frame.

5. A skip loader as claimed in any one of the preceding claims, in which the pivotal mounting of the bucket to the carrier frame comprises a hinge that extends for the full width of the bucket.

6. A skip loader as claimed in any one of the preceding claims, in which the means for moving the carrier frame relative to the main frame includes a motor single or twin pulleys connected by twin cables to the carrier frame, the motor being contained within a housing mounted on the main frame.

7. A skip loader as claimed in any one of the preceding claims, in which clamp means is provided for secure attachment of the main frame of the skip loader to a skip.

8. A skip loader as claimed in any one of the preceding claims, in which ground-engaging wheels are mounted on the main frame to facilitate manoeuvring of the skip loader into a required position.

9. The combination of a skip loader as claimed in any one of the preceding claims and a wheeled transport module for transporting the skip loader, the wheeled transport module including means for engagement with the main frame adjacent the upper and lower ends of the main frame.

10. The combination claimed in Claim 9, in which the wheeled transport module includes a chassis, support struts extending from the chassis and locking means for securing one of the struts to the skip loader.
